(19) Europäisches Patentamt
European Patent Office
Office européen des brevets

(11) Publication number: 0 371 452 B1

# (12) EUROPEAN PATENT SPECIFICATION

(45) Date of publication of patent specification: 04.05.94 (51) Int. Cl.[5]: C09G 1/12

(21) Application number: 89121929.7

(22) Date of filing: 28.11.89

## (54) Polish containing silicone particles.

(30) Priority: 29.11.88 JP 301653/88
01.12.88 JP 304349/88

(43) Date of publication of application:
06.06.90 Bulletin 90/23

(45) Publication of the grant of the patent:
04.05.94 Bulletin 94/18

(84) Designated Contracting States:
BE DE FR GB IT

(56) References cited:
DE-A- 2 435 135
US-A- 4 013 475
US-A- 4 665 116

(73) Proprietor: Dow Corning Toray Silicone Company Ltd.
3-16, Nihombashi-muromachi 2-chome,
Chuo-ku
Tokyo 103(JP)

(72) Inventor: Yoshida, Keiji
1-6 Yushudainishi
Ichihara Chiba(JP)
Inventor: Jamada, Mitsuo
3-5-17 Okubo
Kisaratsu Chiba(JP)
Inventor: Sasaki, Atushi
1-6 Yushudainishi
Ichihara Chiba(JP)
Inventor: Harashima, Asao
1-6 Yushudainishi
Ichihara Chiba(JP)

(74) Representative: Spott, Gottfried, Dr. et al
Patentanwälte Spott und Puschmann
Sendlinger-Tor-Platz 11
D-80336 München (DE)

EP 0 371 452 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is directed to a polish. Polishes have been applied on the surfaces of leather goods, furniture, musical instruments, automotive bodies, for surface protection and for enhanced gloss. For such polishes, film-forming materials such as waxes and dimethyl polysiloxanes oils as gloss-imparting agents are employed. However, conventional polishes have poor applicability and wiping properties, and the surface gloss is not durable.

It is an object of the present invention to provide polishes with excellent applicability, wipeability, soil removal, and gloss retention

The present invention concerns polishes comprising film-forming materials and organopolysiloxane elastomer particles.

Film-forming materials commonly used in polishes are used in the present invention. Such film-forming materials may be waxes such as carnauba wax, montan wax, candellila wax, cerisin wax, and paraffins such as solid paraffins, liquid paraffins, and beeswax.

The organopolysiloxane elastomer particles used in the present invention are effective for providing good wipe workability, soil removal, and gloss retention. Such organopolysiloxane elastomer particles have an average diameter of 0.1-1000 µm, preferably 0.3 µm to 30 µm. Below 0.1 µm, the beneficial effects of organopolysiloxane elastomer are not realized, while above 1000 µm, a rough finish is obtained. Preferably, the particles should be spherical. The amount used varies depending on the type of polishes and is preferably 0.1-30 wt% for cream and emulsion polishes and 0.1-50% for solid or paste polishes. Below the lower limit, the effects of the organopolysiloxane elastomer particles are not realized, while with excessive organopolysiloxane elastomer particles, applicability becomes poor.

The organopolysiloxane elastomer constituting such particles may be obtained by curing addition reaction curable organopolysiloxane compositions comprising organopolysiloxanes containing silicon-bonded hydrogen, organopolysiloxanes containing silicon-bonded vinyl groups, and platinum catalyst as the main components; by curing condensation reaction curable organopolysiloxane compositions comprising organopolysiloxanes containing hydroxy groups at both chain ends, organopolysiloxanes having silicon-bonded hydrogen, and organotin compounds as main components; curing condensation reaction curable organopolysiloxane compositions comprising diorganopolysiloxanes terminated by hydroxy groups at both chain ends, hydrolyzable organosilanes, and organotin compounds or titanic acid esters as the main component; by curing organic peroxide curable organopolysiloxane compositions comprising organopolysiloxanes containing vinyl groups and organic peroxides as main components; or curing high-energy curable organopolysiloxane compositions by irradiating with J-rays or UV rays. Preferred are the addition reaction curable organopolysiloxane compositions and the condensation reaction curable organopolysiloxane compositions.

The organopolysiloxane elastomer particles used in the present invention can be prepared by many different methods. For example, the above organopolysiloxane organopolysiloxane compositions can be poured into water and mixed uniformly by a colloid mill or homomixer. Thereafter, the resulting aqueous dispersions are dispersed in water at a temperature above 50 °C or sprayed into hot air for curing of the organopolysiloxane compositions. It is also possible to cure the organopolysiloxane compositions and mechanically pulverize the cured products.

The polishes of the present invention contain the film-forming materials and the organopolysiloxane elastomer particles described above. The polishes may also contain other additives commonly used in polishes, such as organic solvents, silicone oils, water, surfactants, abrasives, dyes, perfumes, leveling agents, and thickeners. These additives may be used alone or as mixtures. Organic solvents may be kerosene, naphtha, mineral spirits, and methylchloroform. Silicone oils may be dimethyl polysiloxane, methylphenyl polysiloxane, methylhydrogen polysiloxane, amino-modified alkylpolysiloxanes, cyclic dimethyl polysiloxanes, cyclic methylphenyl polysiloxanes, cyclic methylhydrogen polysiloxanes, and epoxy-modified alkyl polysiloxanes. The additives may be used in an amount of 3-250 wt% of the film forming materials. Surfactants are nonionic surfactants such as sorbitan fatty acid esters, glycerin fatty acid esters, decaglycerin fatty acid esters, polyglycerin fatty acid esters, propylene glycol, pentaerythritol- fatty acid esters, polyoxyethylene sorbitan fatty acid esters, polyoxyethylene glycerin fatty acid esters, polyethylene glycol fatty acid esters, polyoxyethylene alkyl ethers, polyoxyethylene phytosterol, phytosterol polyoxyethylene polyoxypropylene alkyl ether, polyoxyethylene castor oil, polyoxyethylene alkylamine fatty acid amide, polyoxytetramethylene polyglyceryl alkyl ether, alkyl fatty acid triglyceride, and polyoxyalkylene dimethyl polysiloxane copolymers; anionic surfactants such as polyoxyalkyl ether sulfate salts, N-acylamino acid salts, alkyl phosphate salts, polyoxyethylene alkyl ether phosphate salts, and fatty acid salts; cationic surfactants such as alkylammonium salts, and alkylbenzylammonium salts; amphoteric surfactants such as

betaine acetate, imidazolium betaine, and lecithin.

The polishes of the present invention can be prepared by mixing the film-forming materials and organopolysiloxane elastomer particles uniformly with the additives.

The present invention is further explained by the following examples. In the examples, parts are by weight, and Me stands for the methyl group.

Reference Example 1

Organopolysiloxane elastomer particles (I) were prepared as follows. A mixture was prepared from 100 parts of dimethyl polysiloxane terminated by hydroxy groups at both chain ends and having a viscosity of 4000mm$^2$/s (cSt),0.9 parts of methyltrimethoxysilane, 1 part of polyoxyethylene alkyl ether (Emulgen 106, a product of Kao Co.), 100 parts of purified water, and 0.2 parts of stannous octoate. The mixture was passed through a colloid mill at a colloid gap of 0.8 mm, discharged into hot water at 60 °C, allowed to stand for 5 hours, and spray-dried to provide the organopolysiloxane elastomer particles. The organopolysiloxane elastomer particles thus obtained were spheres of an average particle diameter of 15 µm as observed by scanning electron micrographs. These particles also had rubbery elasticity.

Reference Example 2

Organopolysiloxane elastomer particles II were prepared as follows. A mixture was prepared from 100 parts of dimethyl polysiloxane terminated by dimethylvinylsiloxy groups at both ends represented by the formula

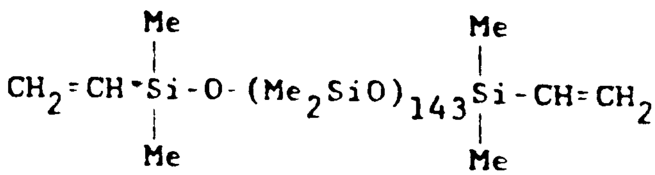

4.7 parts of linear methyl hydrogen polysiloxane containing branches represented by $(Me)_{15}(H)_7(SiO)_9$, 2.5 parts of polyoxyethylene alkyl ether-type nonionic surfactant (Tergitol® TMN-6, a product of Union Carbide Co.), 100 parts of water, and a chloroplatinic acid solution in isopropanol to platinum content of 100 ppm based on the organopolysiloxane. This mixture was poured into a colloid mill to obtain an aqueous dispersion of the organopolysiloxane composition. The dispersion was allowed to flow into a hot water bath at 60 °C to cure the organopolysiloxane composition to obtain organopolysiloxane elastomer particles. Observation of the organopolysiloxane elastomer particles under scanning electron microscope showed spherical particles with an average diameter of 10 µm. The particles had rubbery elasticity.

Application Example 1

In a container equipped with a stirrer was placed 10 parts of carnauba wax, 10 parts of ozoride, 20 parts of beeswax, and 10 parts of microcrystalline wax, and the mixture was melted at 90 °C, and mixed further with 25 parts of liquid paraffin and 10 parts of dimethyl polysiloxane oil having a viscosity of 350 mm$^2$/s (cSt). This was further mixed with magnesium silicate and the organopolysiloxane elastomer particles prepared in Reference Example 1. While being mixed, the mixture was cooled to 50 °C; mixing was stopped, and the mixture was allowed to cool naturally to obtain a solid polish. This polish was applied to a coated metal surface and evaluated for coatability, wipe workability, and appearance. Results are set forth in Table I. Evaluation was performed by a 3-member panel.

For comparison, a polish was prepared without the organopolysiloxane elastomer particles, and evaluated. The results are also set forth in Table I.

**TABLE 1**

| EXAMPLE | ITEMS | EVALUATOR 1 | 2 | 3 |
|---|---|---|---|---|
| Application | Coatability | Easy | Easy | Easy |
| Application | Wipe Workability | Realitively Easy | Easy | Easy |
| Application | Appearance | No Uneveness | No Uneveness | No Uneveness |
| Comparative | Coatability | Difficult | Somewhat Difficult | Somewhat Difficult |
| Comparative | Wipe Workability | Difficult | Catchy | Difficult |
| Comparative | Appearance | Totally Uneven | Uneven | Totally Uneven |

Application Example 2

In a container equipped with a stirrer was heated and mixed 20 parts of carnauba wax (a product of Nippon Chemical Co.), 40 parts of kerosine, and 20 parts of dimethyl polysiloxane oil. After the carnauba wax was melted, 10 parts of organopolysiloxane elastomer particles obtained in Reference Example 2 was added, and the mixture was allowed to cool to room temperature while being stirred to obtain a creamy polish. This polish was coated on the surface of a crepe synthetic black leather and the wipe workability, gloss, and gloss retention were evaluated. The results are set forth in Table II.

For comparison, a polish was prepared as above without the organopolysiloxane elastomer particles (Comparative Example 1), and a polish was prepared using polyethylene powder of an average diameter of 10 $\mu$m instead of the organopolysiloxane elastomer particles (Comparative Example 2). Evaluations were made and the results are set forth in Table II.

**TABLE II**

| EXAMPLE | WIPE WORKABILITY | SOIL CLEANING | GLOSS AS COATED | GLOSS AFTER 7 DAYS |
|---|---|---|---|---|
| Application | Easy Even | Even until in crepe | Uniform* No change | Good |
| Comparative 1 | Easy Even | Even in crepe | Relatively uniform** | Poor No gloss |
| Comparative 2 | Difficult Uneven | Totally uneven | Relatively uniform*** | Poor No gloss |

Polishes containing silicone oils show exuding of the silicone oil from the coating surface forming a silicone oil film around the coated surface and soiling can be a problem. Such problems can be solved by adding certain silicone rubber powders to the film-forming wax materials. The present invention also relates to a polish comprising a film-forming material and a silicone rubber powder containing 0.5-80 wt% of silicone oil.

Any silicone oils can be used with the silicone rubber particles, as long as the oils are nonreactive to the gloss-enhancing components and the silicone rubbers. Preferred oils would have a viscosity of 10-1000 cSt at 25 °C for good polishing effects. Such silicone oils can be dimethyl polysiloxanes terminated by trimethylsiloxy groups at both chain ends, dimethyl siloxane-diphenyl siloxane copolymers terminated by trimethylsiloxy groups at both chain ends, dimethyl siloxanes terminated by trimethylsiloxy groups at both

chain ends, 3,3,3-trifluoropropyl methyl siloxane-dimethyl siloxane copolymers, and perfluoroalkyl group-containing polysiloxanes. The silicone oil content in the silicone rubber particles is 0.5-80 wt%, preferably 3.0-50 wt%.

The present invention is further explained in the following examples. In the examples, parts are by weight, and Me stands for the methyl group.

Reference Example 3

A mixture was prepared from 100 parts of dimethyl polysiloxane terminated by dimethylvinylsiloxy groups at both ends represented by

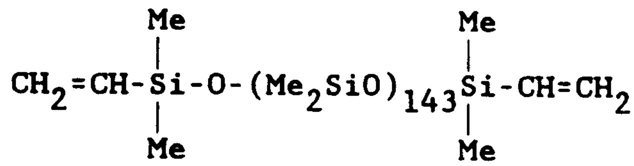

4.7 parts of linear methylhydrogen polysiloxane containing branches represented by $(Me)_{15}(H_7)(SiO)_3$; 50 prts of dimethyl silicone oil having a viscosity of 100 cSt at 25 °C, 2.5 parts of polyoxyethylene alkyl ether nonionic surfactant (Tergitol® TMN-6, a product of Union Carbide Co.), 100 parts of water, and a chloroplatinic acid solution in isopropanol with a platinum content of 100 ppm based on organopolysiloxane. This mixture was poured into a colloid mill to obtain an aqueous dispersion of an organopolysiloxane composition. The dispersion was allowed to flow into a hot water bath at 60 °C to cure the silicone rubber composition to obtain silicone rubber particles. Observation of the silicone rubber particles under a scanning electron microscope showed spherical particles with an average diameter of 7.5 µm. The particles had rubbery elasticity. The dimethyl silicone oil content in 100 g of the silicone rubber particles was 35 g as determined by Soxhlet extraction with.

Application Example 3

In a container equipped with a stirrer was heated and mixed 40 parts of carnauba wax (a product of Nippon Chemical Co.), 40 parts of kerosine, and 10 parts of water at 90 °C. After the carnauba wax had melted, 10 parts of the silicone rubber particles in Reference Example 3 were added. The mixture was allowed to cool to room temperature while being stirred to obtain a polish. The polish was applied to the surface of a white-coated iron plate of an acrylic material and exposed outdoors for 14 days. It rained 3 out of the 14 days. Wipe workability, soil cleansing, dust adhesion, and migration of silicone oil to nonpolished areas were evaluated.

The results are set forth in Table III. For comparison, a polish was prepared as above but without the silicone rubber particles (Comparative Example 1) and its characteristics were also measured and are in Table III. For another comparison, a polish was prepared as above using 10 parts of dimethyl silicone oil instead of the silicone rubber particles (Comparative Example 2) and its characteristics were measured and are in Table III.

TABLE III

| EXAMPLE | WIPE WORKABILITY | SOIL CLEANING | DUST ADHESION | SILICONE OIL MIGRATION | GLOSS RETENTION |
|---|---|---|---|---|---|
| Application 3 | Easy | Easy | None | None | Good |
| Comparative 1 | Easy But Uneven | Somewhat Difficult | None | ---- | Poor No Gloss |
| Comparative 2 | Easy But Uneven | Somewhat Difficult | Substantial | Yes | Poor No Gloss |

## Claims

1. A polish comprising a film forming wax material and an organopolysiloxane elastomer, the elastomer being in the form of particles mixed with the film forming wax, wherein the particles have an average

diameter of 0,1 to 1000 µm and wherein the amount of the elastomer is 0,1 to 30 wt.% for cream and emulsion polishes and 0,1 to 50 wt.% for solid or paste polishes.

**2.** The polish of Claim 1 including at least one additive selected from the group consisting of organic solvents, silicone oils, and surfactants.

**3.** The polish of Claim 2 wherein the film forming wax material is selected from the group consisting of carnauba wax, montan wax, candelilla wax, ceresin wax, paraffin waxes, and beeswax.

**4.** The polish of Claim 3 in which the elastomer forming the particles is selected from the group consisting of addition reaction curable organopolysiloxane compositions, condensation reaction curable organopolysiloxane compositions, organic peroxide curable organopolysiloxane compositions, and high energy curable organopolysiloxane compositions.

**5.** A polish comprising a film forming wax material and a silicone rubber, the rubber being in the form of particles mixed with the film forming wax, the silicone rubber particles containing a silicone oil, wherein the particles have an average diameter of 0,1 to 1000 µm and wherein the amount of the rubber is 0,1 to 30 wt.% for cream and emulsion polishes and 0,1 to 50 wt.% for solid or paste polishes.

**6.** The polish of Claim 5 including at least one additive selected from the group consisting of organic solvents, a second silicone oil, and surfactants.

**7.** The polish of Claim 6 wherein the film forming wax material is selected from the group consisting of carnauba wax, montan wax, candelilla wax, ceresin wax, paraffin waxes, and beeswax.

**Patentansprüche**

**1.** Poliermittel umfassend ein filmbildendes Wachsmaterial und ein Organopolysiloxanelastomer, wobei das Elastomer in Form von Teilchen mit dem filmbildenden Wachs vermischt wird, wobei die Teilchen einen durchschnittlichen Durchmesser von 0,1 bis 1000 µm haben und wobei die Menge des Elastomers 0,1 bis 30 Gew.-% für Creme- und Emulsionspoliermittel und 0,1 bis 50 Gew.-% für feste und pastenartige Poliermittel ist.

**2.** Poliermittel nach Anspruch 1, enthaltend mindestens ein Additiv ausgewählt aus der Gruppe bestehend aus organischen Lösungsmitteln, Silikonölen und Tensiden.

**3.** Poliermittel nach Anspruch 2, worin das filmbildende Wachsmaterial ausgewählt ist aus der Gruppe bestehend aus Carnauba-Wachs, Montan-Wachs, Candelilla-Wachs, Ceresin-Wachs, Paraffin-Wachsen und Bienenwachs.

**4.** Poliermittel nach Anspruch 3, worin das die Teilchen bildende Elastomer ausgewählt ist aus der Gruppe bestehend aus durch Additionsreaktion härtbaren Organopolysiloxanzusammensetzungen, durch Kondensationsreaktion härtbaren Organopolysiloxanzusammensetzungen, durch organische Peroxide härtbaren Organopolysiloxanzusammensetzungen und durch Hochenergie härtbaren Organopolysiloxanzusammensetzungen.

**5.** Poliermittel umfassend ein filmbildendes Wachsmaterial und einen Silikonkautschuk, wobei der Kautschuk in Form von Teilchen ist, die mit dem filmbildenden Wachs vermischt sind, wobei die Silikonkautschukteilchen ein Silikonöl enthalten, wobei die Teilchen einen durchschnittlichen Durchmesser von 0,1 bis 1000 µm haben und wobei die Menge des Kautschuks 0,1 bis 30 Gew.-% für Creme- und Emulsionspoliermittel und 0,1 bis 50 Gew.-% für feste oder pastenartige Poliermittel ist.

**6.** Poliermittel nach Anspruch 5, enthaltend mindestens ein Additiv aus der Gruppe bestehend aus organischen Lösungsmitteln, einem zweiten Silikonöl und Tensiden.

**7.** Poliermittel nach Anspruch 6, worin das filmbildende Wachsmaterial ausgewählt ist aus der Gruppe bestehend aus Carnauba-Wachs, Montan-Wachs, Candelilla-Wachs, Ceresin-Wachs, Paraffin-Wachsen und Bienenwachs.

## Revendications

**1.** Un produit à polir comprenant une matière cireuse filmogène et un élastomère d'organopolysiloxane, l'élastomère étant sous la forme de particules mêlées à la cire filmogène, les particules ayant un diamètre moyen de 0,1 à 1000 µm, et la proportion de l'élastomère étant de 0,1 à 30% en poids pour des produits à polir en crèmes et en émulsions et de 0,1 à 50 % en poids pour des produits à polir solides ou en pâtes.

**2.** Le produit à polir de la revendication 1 renfermant au moins un additif choisi dans le groupe formé par les solvants organiques, les huiles de silicones et les agents tensioactifs.

**3.** Le produit à polir de la revendication 2 dans lequel la matière cireuse filmogène est choisie dans le groupe formé par la cire de carnauba, la cire minérale, la cire de candelilla, la cire de cérésine, les cires de paraffines et la cire d'abeilles.

**4.** Le produit à polir de la revendication 3 dans lequel l'élastomère formant les particules est choisi dans le groupe formé par les compositions d'organosiloxanes durcissables par réaction d'addition, les compositions d'organosiloxanes durcissables par réaction de condensation, les compositions d'organosiloxanes durcissables par un peroxyde organique et les compositions d'organosiloxanes durcissables par rayonnement à haute énergie.

**5.** Un produit à polir comprenant une matière cireuse filmogène et un caoutchouc de silicone, le caoutchouc étant sous la forme de particules en mélange avec la cire filmogène, les particules de caoutchouc de silicone contenant une huile de silicone, les particules ayant un diamètre moyen de 0,1 à 1000 µm et la proportion du caoutchouc étant de 0,1 à 30 % en poids pour des produits à polir en crèmes et en émulsions et de 0,1 à 50 % en poids pour des produits à polir solides ou en pâtes.

**6.** Le produit à polir de la revendication 5 renfermant au moins un additif choisi dans le groupe formé par les solvants organiques, une seconde huile de silicone et les agents tensioactifs.

**7.** Le produit à polir de la revendication 6 dans lequel la matière cireuse filmogène est choisie dans le groupe formé par la cire de carnauba, la cire minérale, la cire de candelilla, la cire de cérésine, les cires de paraffines et la cire d'abeilles.